# EUROPÄISCHE PATENTSCHRIFT

(11) **EP 2 734 409 B1**
(45) Veröffentlichungstag und Bekanntmachung des Hinweises auf die Patenterteilung: **09.09.2015**
(21) Anmeldenummer: 12734905.8
(22) Anmeldetag: 05.07.2012
(51) Int. Cl.: B60N 2/225, B60N 2/12

(54) **SITZBESCHLAG FÜR EINEN KRAFTFAHRZEUGSITZ**
SEAT FITTING FOR A MOTOR VEHICLE SEAT
FERRURE POUR UN SIÈGE DE VÉHICULE

(30) Priorität: 22.07.2011 DE 102011052059
(43) Veröffentlichungstag der Anmeldung: 28.05.2014
(73) Patentinhaber: Johnson Controls Metals and Mechanisms GmbH & Co. KG, 42699 Solingen (DE)
(72) Erfinder: BALZAR, David, 42799 Leichlingen (DE); WINGENSIEFEN, Wilhelm, 42929 Wermelskirchen (DE); HOFFMANN, Andreas, 42489 Wülfrath (DE)
(74) Vertreter: Loock, Jan Pieter
(86) Internationale Anmeldenummer: PCT/EP2012/063156
(87) Internationale Veröffentlichungsnummer: WO 2013/013952

(56) Entgegenhaltungen:
- DE-A1-102005 060 484
- DE-A1-102008 063 359
- DE-U1-202005 008 272
- DE-U1-202008 008 312

## Beschreibung

Die Erfindung betrifft einen Sitzbeschlag für einen Kraftfahrzeugsitz, mit
- einem mit einem Sitzunterteil verbindbaren Beschlagunterteil,
- einem mit einer Sitzlehne verbindbaren Beschlagoberteil,
- einem das Beschlagoberteil und Beschlagunterteil gelenkig verbindenden Exzenterumlaufgetriebe zur Einstellung der Neigung des Beschlagoberteils gegenüber dem Beschlagunterteil und
- einem Betätigungsmittel zur Kopplung des Sitzbeschlags mit einer Sitzlängsführung,
wobei das Beschlagoberteil einen ortsfest mit der Sitzlehne verbindbaren Schwenkkörper aufweist, der mit einem Grundkörper der Beschlagoberteils entriegelbar verbunden und gegenüber dem Beschlagunterteil in der Entriegelungslage in eine Vorklappstellung bringbar ist, in der eine erste Anschlagfläche an dem einen von Schwenkkörper und Beschlagunterteil an einem Anschlagelement an dem anderen von Schwenkkörper und Beschlagunterteil anliegt.

Sitzbeschläge der eingangs genannten Art werden an Kraftfahrzeugsitzen dazu genutzt, um die Sitzlehne bzw. Rückenlehne des Kraftfahrzeugsitzes an die nutzerseits bestehenden Bedürfnisse anzupassen, wobei der Sitzbeschlag ein Verschwenken der Rückenlehne gegenüber dem die Sitzfläche aufweisenden Sitzunterteil ermöglicht. Hierzu ist der Schwenkkörper des Beschlagoberteils mit einer Sitzlehnenstruktur und das Beschlagunterteil mit der Struktur des Sitzunterteils verbunden.

Um bei zweitürigen Fahrzeugen den Zugang zu den Rücksitzen zu erleichtern, weisen die gattungsgemäßen Sitzbeschläge eine sogenannte "Easy-Entry-Funktion" auf. Diese ermöglicht es, nach einer vorhergehenden Entriegelung des mit der Sitzlehne verbundenen Schwenkkörpers gegenüber dem Grundkörper, die Sitzlehne stufenlos in eine Vorklappstellung zu verlagern. Darüber hinaus sind an dem Sitzbeschlag Betätigungsmittel vorgesehen, welche mit einer Feststellvorrichtung einer Sitzlängsführung koppelbar sind und in der Vorklappstellung eine Entriegelung der Sitzlängsführung bewirken, so dass der Sitz in der Vorklappstellung zusätzlich rastfrei ohne Weiteres nach vorne verschoben werden kann, was einer Person den Einstieg in den Fond des Kraftfahrzeugs zusätzlich erleichtert.

Bei bekannten Sitzbeschlägen der eingangs genannten Art erfolgt eine Kopplung des Sitzbeschlags mit der Feststellvorrichtung der Sitzlängsführung über einen am Sitzbeschlag angeordneten Bowdenzug, dessen Seele einenends mit dem Sitzbeschlag und anderenends mit der Feststellvorrichtung der Sitzlängsführung verbunden ist, so dass eine Verlagerung der Bowdenzugseele eine Verstellung der Feststellvorrichtung zwischen einer Ver- und einer Entriegelungsstellung bewirkt. Die Verwendung von Exzenterumlaufgetrieben - die wegen ihrer Bewegungscharakteristik auch als Taumelgetriebe bezeichnet werden - zur Kopplung des Beschlagoberteils mit dem Beschlagunterteil hat zur Folge, dass bei der Verstellung des Sitzbeschlags das Beschlagoberteil gegenüber dem Beschlagunterteil eine Taumelbewegung ausführt. Hierbei besteht das Problem, dass bei bekannten Sitzbeschlägen die Betätigungsmittel derart ausgebildet sind, dass in Abhängigkeit von der Gebrauchsposition, in der sich die Sitzlehne gegenüber dem Sitzunterteil befindet eine unterschiedliche Längung des Bowdenzugs in der Vorklappstellung vorliegt, so dass unterschiedliche Betätigungswege zum Entriegeln der Feststellvorrichtung der Sitzlängsführung auftreten.

Zur Lösung dieses Problems ist es bekannt, die Feststellvorrichtungen der Sitzlängsführung entsprechend der Taumelbewegung des Sitzbeschlags auszuführen, so dass in jeder Betätigungslage des Bowdenzugs in der Vorklappstellung eine zuverlässige Entriegelung der Feststellvorrichtung erfolgt. Dies hat jedoch zur Folge, dass die Sitzlängsführung, bzw. die Feststellvorrichtung einen gegenüber einer gleichbleibenden Längung des Bowdenzugs deutlich erhöhten Bauraum beansprucht, da für alle auftretenden Längungen des Bowdenzugs eine ausreichende Verlagerung innerhalb der Feststellvorrichtung gewährleistet werden muss.

Insbesondere kennt der Stand der Technik, beispielsweise aus den Druckschriften DE 10 2008 063 359 A1, DE 10 2005 060 484 A1 oder der gattungsbildenden DE 20 2008 008 312 U1 Sitzbeschläge, deren Beschlagteile über eine Exzenter- bzw. Taumelgetriebe miteinander verbunden sind und die vorzugsweise mittels eines Betätigungsmittels an die Sitzlängsführung gekoppelt sind.

Darüber hinaus kennt der Stand der Technik aus der Druckschrift DE 20 2005 008 272 U1 ein Kraftfahrzeugsitzanordnung, deren Betätigungselement verschieb- und verschwenkbar an eine Taumelwelle bzw. Exzenterwelle gelagert ist.

Der Erfindung liegt die Aufgabe zugrunde, einen Sitzbeschlag der eingangs genannten Art bereitzustellen, dessen Betätigungsmittel unabhängig von der eingestellten Gebrauchsposition des Sitzbeschlags in der Vorklappstellung eine im Wesentlichen gleichbleibende Verlagerung eines an dem Betätigungsmittel angeordneten Kopplungselements bewirken.

Die Erfindung löst die Aufgabe durch einen Sitzbeschlag mit den Merkmalen des Anspruchs 1. Vorteilhafte Weiterbildungen der Erfindung sind in den abhängigen Ansprüchen angegeben.

Kennzeichnend für den erfindungsgemäßen Sitzbeschlag ist, dass das Betätigungsmittel durch einen Entriegelungshebel gebildet ist, der an dem Beschlagunterteil angeordnet und zwischen einer Ruhelage und einer Betätigungslage verstellbar ist und der einenends zur Anordnung eines Kopplungselements und anderenends einen ersten Anschlagkörper aufweist, der im Bereich um die Vorklappstellung des Schwenkkörpers mit einem zweiten Anschlagkörper an dem Schwenkkörper in Eingriff befindlich ist, wobei der erste Anschlagkörper oder der zweite Anschlagkörper durch eine zweite Anschlagfläche gebildet ist, die derart ausgebildet ist, dass der Schwenkkörper in der Vorklappstellung den Entriegelungshebel unabhängig von der eingestellten Neigung des Beschlagoberteils im Wesentlichen vollständig in die Entriegelungslage verlagert.

Erfindungsgemäß ist der in der Vorklappstellung zur Betätigung der Feststellvorrichtung der Sitzlängsführung vorgesehene Entriegelungshebel am Beschlagunterteil gelenkig angeordnet und zwischen einer Ruhelage, in der dieser keinen Einfluss auf die Feststellvorrichtung ausübt, und einer Betätigungslage verstellbar, in der ein an dem Entriegelungshebel angeordnetes Kopplungselement eine Entriegelung der Feststellvorrichtung der Sitzlängsführung bewirken kann. Im Gegensatz zur Anordnung des Entriegelungshebels am Beschlagoberteil wird der erfindungsgemäß am Beschlagunterteil angeordnete Entriegelungshebel bei einer Verstellung des Sitzbeschlags nicht bewegt und folgt somit insbesondere nicht der Taumelbewegung des Beschlagoberteils gegenüber dem Beschlagunterteil. Der Einfluss der Taumelbewegung auf den Entriegelungshebel macht sich jedoch in der Vorklappstellung des Schwenkkörpers bemerkbar.

Die Vorklappstellung wird bestimmt durch eine Anlage des Schwenkkörpers an dem Beschlagunterteil. Hierzu ist entweder an dem Beschlagunterteil oder dem Schwenkkörper eine erste Anschlagfläche angeordnet, wohingegen an dem anderen, nicht die Anschlagfläche aufweisenden Bauteil das an der Anschlagfläche anliegende Anschlagelement angeordnet ist. In Abhängigkeit von der Ausgangsstellung aus der der Schwenkkörper in die Vorklappstellung verlagert wird verändert sich dabei aufgrund der Taumelbewegung des Beschlagoberteils gegenüber dem Beschlagunterteil der Anschlagpunkt zwischen dem Anschlagelement und der Anschlagfläche.

Um in der Vorklappstellung eine Betätigung des Entriegelungshebels zu bewirken, ist an dem Schwenkkörper ferner ein zweiter Anschlagkörper angeordnet, der in der zuvor beschriebenen Vorklappstellung mit einem ersten Anschlagkörper am Entriegelungshebel derart zusammenwirkt, dass der Entriegelungshebel in die Betätigungslage verstellt ist. Die Taumelbewegung führt dabei dazu, dass der Kontaktbereich der beiden Anschlagkörper variiert. Erfindungsgemäß ist der erste Anschlagkörper an dem Entriegelungshebel oder der zweite Anschlagkörper am Schwenkkörper als zweite Anschlagfläche gebildet, die derart ausgebildet, insbesondere ausgerichtet ist, um mit dem anderen Anschlagkörper den Entriegelungshebel in der Vorklappstellung unabhängig von der zuvor eingestellten Neigung des Beschlagoberteils im Wesentlichen vollständig in die Entriegelungslage zu verlagern. Wesentlich für die von der Gebrauchsslage des Beschlagoberteils gegenüber dem Beschlagunterteil und somit für eine von der Taumelstellung unabhängige Verlagerung des Entriegelungshebels in die Entriegelungslage ist die Ausrichtung der zweiten Anschlagfläche, welche in der Vorklappstellung die aufgrund der Taumelbewegung variierende Lage des Schwenkkörpers ausgleicht. Im Zusammenwirken der zweiten Anschlagfläche mit dem ersten oder zweiten Anschlagkörper - je nachdem welcher nicht als Anschlagfläche ausgebildet ist - wird der Entriegelungshebel im Wesentlichen immer vollständig in die Entriegelungslage verstellt.

Der erfindungsgemäß ausgestaltete Sitzbeschlag erlaubt es aufgrund der im Wesentlichen gleichbleibenden Verstellung des Entriegelungshebels, die Feststellvorrichtung der Sitzlängsführung mit einem nur geringen Raumbedarf auszuführen. Auf zusätzlichen Bauraum, welcher zum Ausgleich der aus der Taumelbewegung resultierenden Verstellung resultiert, kann aufgrund der erfindungsgemäßen Ausgestaltung verzichtet werden. Unabhängig von der eingestellten Gebrauchsposition gewährleistet der erfindungsgemäße Sitzbeschlag, dass in der Vorklappstellung ein mit dem Sitzbeschlag gekoppelte Feststellvorrichtung zuverlässig entriegelt wird, so dass sich der Kraftfahrzeugsitz dann in die zum Einstieg komfortable "Easy-Entry-Posidon" verschieben lässt.

Wesentlich für die Funktion des erfindungsgemäßen Sitzbeschlages ist die Ausrichtung der ersten und zweiten Anschlagfläche zueinander, wobei die erste Anschlagfläche die Vorklappstellung bestimmt, wohingegen die zweite Anschlagfläche zur Verstellung des Entriegelungshebels in die Betätigungslage genutzt wird. Die Ausrichtung dieser beiden Flächen zueinander ermöglicht dabei einen Ausgleich der Taumelbewegung des Beschlagoberteils gegenüber dem Beschlagunterteil, bzw. der sich aus der Taumelbewegung ergebenden abweichenden Anlage der mit der ersten und zweiten Anschlagfläche in Eingriff bringbaren Anschlagkörper.

Insbesondere ausschlaggebend ist dabei die Ausrichtung der Anschlagflächen in der Vorklappstellung des Sitzbeschlags. Nach einer besonders vorteilhaften Ausgestaltung der Erfindung ist vorgesehen, dass die erste Anschlagfläche gegenüber der zweiten Anschlagfläche in der Vorklappstellung um nicht mehr als 30°, bevorzugt nicht mehr als 20° geneigt ist. Es hat sich gezeigt, dass bei einer entsprechenden Ausgestaltung der Anschlagflächen der aus der Taumelbewegung resultierende Einfluss weitestgehend eliminiert werden kann. Besonders bevorzugt verlaufen die erste Anschlagfläche und zweite Anschlagfläche in der Vorklappstellung im Wesentlichen parallel, was zu einer nahezu vollständigen Reduzierung des Einflusses der Taumelbewegung führt, wodurch in besonderer Weise gewährleistet werden kann, dass unabhängig von der Ausgangslage des Beschlagoberteils gegenüber dem Beschlagunterteil in der Vorklappstellung des Schwenkkörpers dieser den Entriegelungshebel im Wesentlichen vollständig in die Betätigungslage verlagert. Aufgrund der vorteilhafterweise vorgesehenen Ausrichtung der Anschlagfläche im vorgenannten Winkelbereich - bevorzugt parallel zueinander - wird erreicht, dass obgleich der mit der zweiten Anschlagfläche in Kontakt gelangende Anschlagkörper in Abhängigkeit von der Gebrauchsposition an verschiedenen Punkten der zweiten Anschlagfläche angreift, der zur Verlagerung des Entriegelungshebels in die Betätigungslage erforderliche Verstellweg im Wesentlichen immer gleichbleibend ist.

Obgleich grundsätzlich bereits durch die erfindungsgemäße Ausgestaltung der zweiten Anschlagfläche der Einfluss der Taumelbewegung des Sitzbeschlags auf die Verstellung des Entriegelungshebels ausgeglichen werden kann, ist nach einer besonders vorteilhaften Weiterbildung der Erfindung vorgesehen, dass der mit der zweiten Anschlagfläche in Eingriff bringbare Anschlagkörper derart angeordnet ist, dass dieser in der Vorklappstellung im Bereich einer sich in dieser Stellung senkrecht durch die erste Anschlagfläche und das Anschlagelement erstreckenden Orthogonalen an der zweiten Anschlagfläche anliegt. Gemäß dieser Weiterbildung der Erfindung erfolgt die Anordnung des Anschlagkörpers, welcher mit der zweiten Anschlagfläche in Eingriff gelangt, um den Entriegelungshebel in die Betätigungslage zu verstellen, im Bereich einer Linie, welche sich senkrecht zur ersten Anschlagfläche und dabei durch das an der ersten Anschlagfläche anliegende Anschlagelement erstreckt. Eine entsprechende Anordnung des mit der zweiten Anschlagfläche in Eingriff bringbaren Anschlagkörpers reduziert den Einfluss der Taumelbewegung in ergänzender Weise, so dass besonders zuverlässig eine von der Taumelbewegung unabhängige Verstellung des Entriegelungshebels gewährleistet werden kann. Die Orthogonale bestimmt dabei den Bereich, in dem der Anschlagkörper angeordnet werden kann.

Wesentlich für die Funktion des erfindungsgemäßen Sitzbeschlages ist die Möglichkeit, diesen aufgrund der zumindest zweiteiligen Ausführung des Beschlagoberteils, nämlich gebildet durch den Grundkörper sowie den Schwenkkörper nach einer Entriegelung voneinander in eine Vorklappstellung bringen zu können, in der der Zugang zum Fond bei zweitürigen Fahrzeugen erleichtert wird, wobei der in der Vorklappstellung befindliche Sitzbeschlag aufgrund der Kopplungsmöglichkeiten mit einer Feststellvorrichtung einer Sitzlängsführung eine Vorverschiebung eines entsprechend ausgebildeten Kraftfahrzeugsitzes ermöglicht. Obgleich die Funktion des erfindungsgemäßen Sitzbeschlags somit bereits gewährleistet ist, kann nach einer weiteren Ausgestaltung der Erfindung vorgesehen werden, dass der Sitzbeschlag in der Vorklappstellung arretierbar ist. Hierzu ist nach einer Weiterbildung der Erfindung vorgesehen, dass zur lösbaren Arretierung des Schwenkkörpers in dessen Vorklappstellung an dem Beschlagunterteil ein erster Fanghaken mit einer ersten Haltefläche angeordnet ist, der in der Vorklappstellung mit einem eine zweite Haltefläche aufweisenden zweiten Fanghaken in Eingriff befindlich ist, wobei die Halteflächen bevorzugt in der Vorklappstellung im Bereich der Orthogonalen aneinander anliegen.

Gemäß dieser Ausgestaltung der Erfindung wirken zwei Fanghaken mit ihren Halteflächen in der Vorklappstellung zusammen und arretieren so die Position des Schwenkkörpers in der Vorklappstellung. Hierdurch wird auch eine Arretierung des Entriegelungshebels in der Betätigungslage erreicht, so dass gewährleistet wird, dass bei einer Kopplung des Entriegelungshebels mit der Feststellvorrichtung diese zuverlässig in einer Position gehalten wird, in der der Sitz gegenüber der Sitzlängsführung frei verstellt werden kann. Eine Anordnung der Halteflächen im Bereich der sich durch die erste Anschlagfläche und das Anschlagelement erstreckenden Orthogonalen gewährleistet dabei, dass auch im Falle der durch die Fanghaken festgelegten Position des Schwenkkörpers der Einfluss der Taumelbewegung unbeachtlich ist, so dass unabhängig von der eingestellten Neigung des Beschlagoberteils gegenüber dem Beschlagunterteil gewährleistet wird, dass auch in jeder durch die Fanghaken festgelegten Position des Schwenkkörpers gegenüber dem Beschlagunterteil der Entriegelungshebel im Wesentlichen vollständig in Richtung auf seine Betätigungslage verstellt ist.

Wie bereits eingangs dargelegt, kann die zweite Anschlagfläche sowohl an dem Entriegelungshebel als auch den dem Schwenkkörper angeordnet sein. Nach einer besonders vorteilhaften Ausgestaltung der Erfindung ist jedoch vorgesehen, dass der zweite Anschlagkörper durch einen Anschlagstift gebildet ist, der mit einer am Entriegelungshebel ausgebildeten zweiten Anschlagfläche in Eingriff bringbar ist. Diese Ausgestaltung der Erfindung ermöglicht aufgrund der einfachen Herstellungsmöglichkeiten des Entriegelungshebels eine einfache Anpassung der zweiten Anschlagfläche an die erste Anschlagfläche, welche für die Funktion des Sitzbeschlags erforderlich ist. Bei einer entsprechenden Anordnung der zweiten Anschlagfläche kann auf weitere Anpassungen des Schwenkkörpers verzichtet werden, so dass sich der entsprechend weitergebildete Sitzbeschlag besonders kostengünstig herstellen lässt.

Vorteilhafterweise ist ferner vorgesehen, dass die erste Anschlagfläche am Schwenkkörper ausgebildet ist, die in der Vorklappstellung an einem als Anschlagbolzen ausgebildeten Anschlagelement anliegt. Insbesondere im Falle der Ausbildung der zweiten Anschlagfläche an dem Entriegelungshebel erlaubt diese Ausgestaltung der Erfindung eine einfache Ausgestaltung des Schwenkkörpers, welcher lediglich im Bereich seines Zusammenwirkens mit dem Anschlagbolzen zur Bildung der ersten Anschlagfläche ausgestaltet sein muss. Die Mindestlänge der ersten Anschlagfläche ergibt sich dabei aus der Taumelbewegung des Exzenterumlaufgetriebes, wobei die Lage des Beschlagoberteils gegenüber dem Beschlagunterteil den Punkt bestimmt, an dem die erste Anschlagfläche in der Vorklappstellung an dem Anschlagbolzen anliegt.

Die Ausgestaltung des Entriegelungshebels ist grundsätzlich frei wählbar, wobei sich insbesondere über den Abstand zwischen dem Anlenkpunkt des Entriegelungshebels an dem Beschlagunterteil und dem Anbringungspunkt des Kopplungselements der Verstellweg des Kopplungselements festlegen lässt. Nach einer besonders vorteilhaften Ausgestaltung der Erfindung ist dabei vorgesehen, dass der Entriegelungshebel im Bereich zwischen einer Aufnahmeöse, welche zur Anordnung eines Kopplungselements dient, bspw. eines Bowdenzugs, und seiner Schwenkachse ein Langloch, vorzugsweise gekrümmtes Langloch aufweist, das koaxial zur Beschlagachse angeordnet ist. Diese Ausgestaltung der Erfindung ermöglicht es, den Sitzbeschlag besonders kompakt auszuführen. Gleichzeitig kann über eine Anordnung eines Langlochs koaxial zur Beschlagachse eine einfache Festlegung der Ruhelage und Betätigungslage erfolgen, wobei die einander gegenüberliegenden Enden des Langlochs als Endanschläge fungieren, welche an einer sich bspw. durch das Langloch erstreckenden Antriebsachse des Beschlags anliegen.

Ein Ausführungsbeispiel der Erfindung wird nachstehend mit Bezug auf die Zeichnungen näher erläutert. In den Zeichnungen zeigen:
- Fig. 1: eine Vorderansicht eines Sitzbeschlags in einer eingestellten Gebrauchsposition;
- Fig. 1a: eine Rückansicht des Beschlags von Fig. 1 in der Gebrauchsposition;
- Fig. 2: eine Vorderansicht des Beschlags von Fig. 1 in einer Neigungsendstellung;
- Fig. 2a: eine Rückansicht des Sitzbeschlags von Fig. 1 in der in Fig. 2 dargestellten Neigungsendstellung;
- Fig. 3: eine Vorderansicht des Sitzbeschlags von Fig. 1 mit einem teilweise in Richtung auf eine Vorklappstellung verlagerten, von einem Grundkörper entriegelten Schwenkkörper;
- Fig. 3a: eine Rückansicht des Sitzbeschlags von Fig. 1 in der in Fig. 3 dargestellten Position;
- Fig. 4: eine Vorderansicht des Sitzbeschlags von Fig. 1 in einer Vorklappstellung;
- Fig. 4a: eine Rückansicht des Sitzbeschlags von Fig. 1 in der in der Fig. 4 dargestellten Position;
- Fig. 5: eine Vorderansicht des Sitzbeschlags von Fig. 1 in einer Vorklappstellung ausgehend von einer gegenüber der in Fig. 1 dargestellten Lage um 180° verdrehten Antriebswelle und
- Fig. 5a: eine Rückansicht des Sitzbeschlags von Fig. 1 in der in Fig. 5 dargestellten Position.

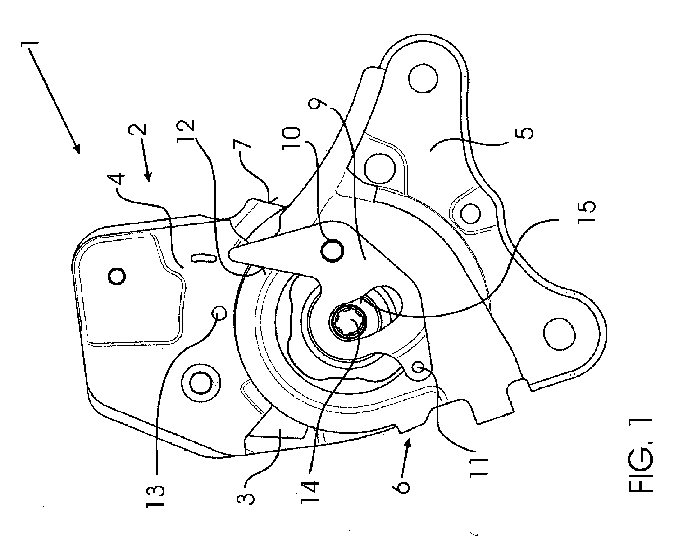

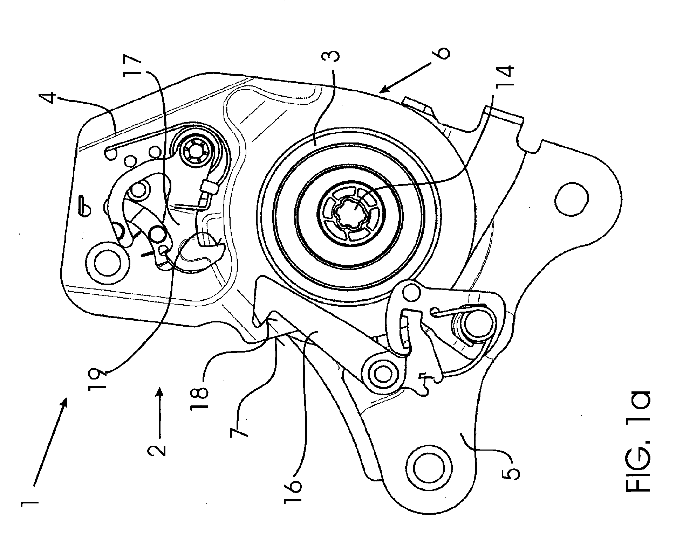

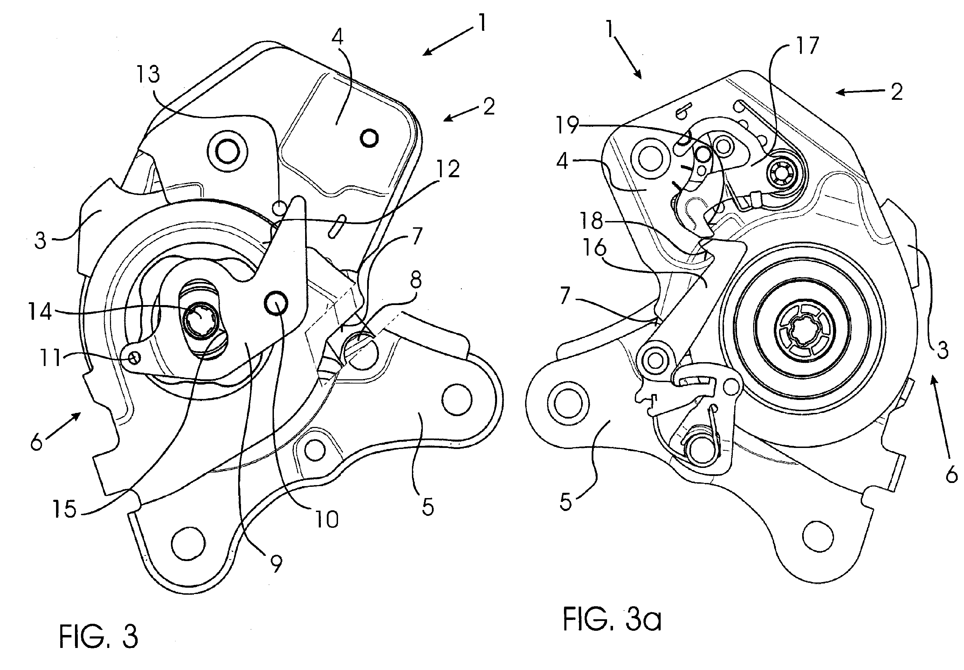

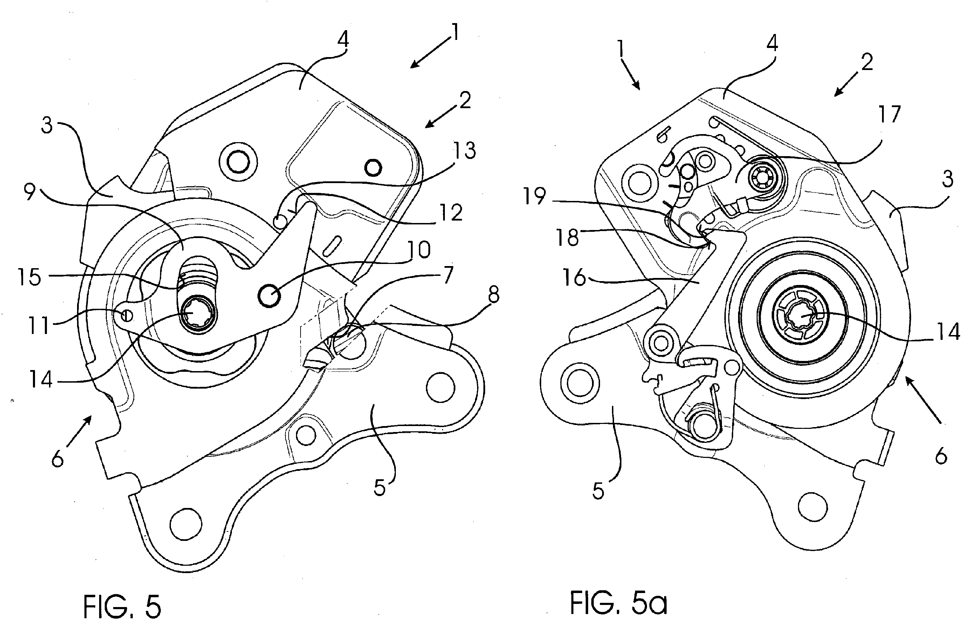

In den Fig. 1 - 5a ist eine Ausführungsform eines Sitzbeschlags 1 in unterschiedlichen Positionen dargestellt. Dabei gehen die in Fig. 3 - 4a dargestellten Positionen von der in Fig. 1 bzw.1a dargestellten Gebrauchsposition des Sitzbeschlags 1 aus, wohingegen die in Fig. 5 und 5a dargestellte Vorklappstellung des Sitzbeschlags 1 von einer hier nicht dargestellten Gebrauchsposition des Sitzbeschlags 1 ausgehen, bei dem ein Beschlagoberteil 4 des Sitzbeschlags 1 in einer Position angeordnet ist, in welcher ein Exzenter eines Exzentergetriebes 6 gegenüber der in Fig. 1 und 1a dargestellten Position um 180° verdreht ist.

Zur Verstellung einer hier nicht dargestellten Sitzlehne bzw. Rückenlehne eines Fahrzeugsitzes gegenüber einem hier ebenfalls nicht dargestellten Sitzunterteil weist der Sitzbeschlag 1 ein mit der Sitzlehne verbindbares Beschlagoberteil 2 auf. Das Beschlagoberteil 2 ist gegenüber dem mit dem Sitzunterteil verbindbaren Beschlagunterteil 5 verschwenkbar. Zur Verschwenkung dient dabei ein das Beschlagoberteil 2 und das Beschlagunterteil 5 verbindendes Exzentergetriebe 6, welches durch eine sich durch den Beschlag ersteckende Antriebswelle 14 antreibbar ist. Bei einer zum Zwecke der Verstellung vorgenommenen Verdrehung der Antriebswelle 14 vollführt diese aufgrund der Ausgestaltung des Exzenterumlaufgetriebes 6, welches auch als Taumelgetriebe bezeichnet wird, eine Taumelbewegung, welcher auch das Beschlagoberteil 2 bei einer Schwenkbewegung folgt.

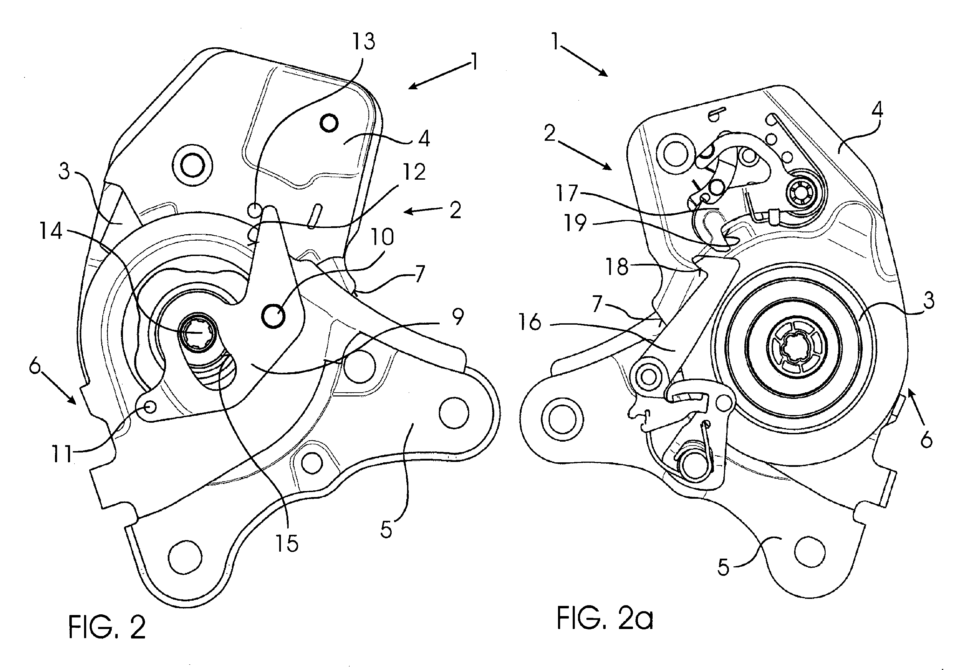

Der Sitzbeschlag 1 ermöglicht dem Fahrzeugnutzer über einen Antrieb des Exzenterumlaufgetriebes 6 eine Einstellung einer Gebrauchsposition des Fahrzeugsitzes, wobei der Fahrzeugnutzer das Beschlagoberteil 2 in einem vorgegebenen Schwenkwinkelbereich gegenüber dem Beschlagunterteil 5 anordnet. In den Fig. 1 und 1a ist exemplarisch eine erste Gebrauchsposition dargestellt. Eine zweite Gebrauchsposition ist in den Fig. 2 und 2a dargestellt. Sie entspricht dabei der Gebrauchsposition, in der das Beschlagoberteil 2 seine größte Vorlage aufweist. Eine weitergehende Verstellung durch einen Antrieb des Exzenterumlaufgetriebes 6 ist durch einen hier nicht dargestellten Endanschlag begrenzt.

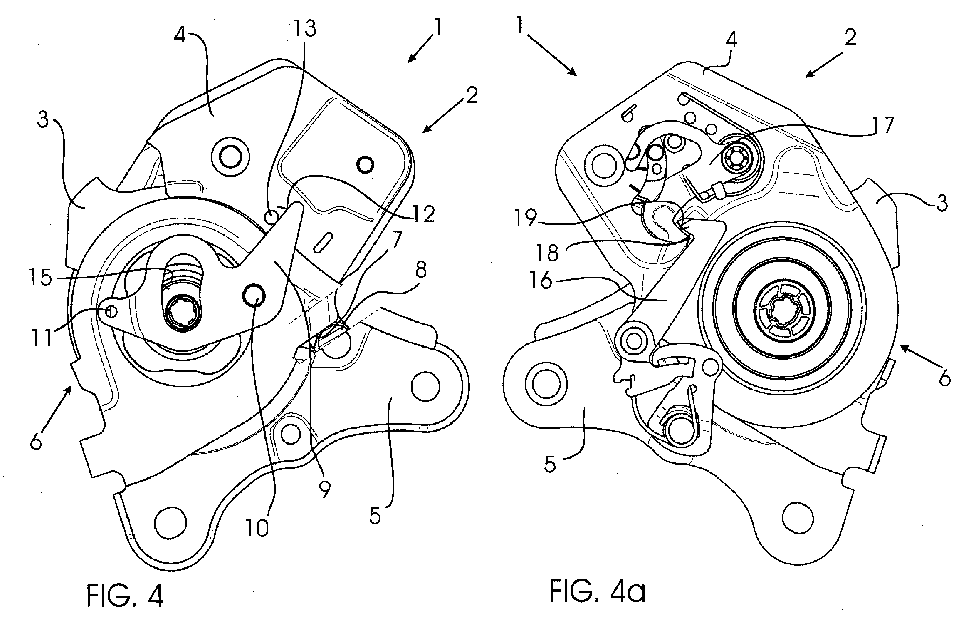

Zur Erleichterung der Zugänglichkeit der im Fondbereich eines Kraftfahrzeugs angeordneten Sitze weist der dargestellte Sitzbeschlag 1 eine sogenannte "Easy-Entry-Funktion" auf. Diese ermöglicht es, das Beschlagöberteil 2 aus einer beliebigen Gebrauchsposition in eine in den Fig. 4 und 4a sowie 5 und 5a dargestellte Vorklappstellung zu bringen, in der darüber hinaus über einen Entriegelungshebel 9 eine hier nicht dargestellte Feststellvorrichtung einer Sitzlängsführung derart betätigt wird, dass eine Verriegelung des Sitzes mit der Sitzlängsführung aufgehoben und so der Fahrzeugsitz rastfrei in eine vordere Position verschoben werden kann.

Zur Ausgestaltung des Sitzbeschlags 1 mit der "Easy-Entry-Funktion" weist das Beschlagoberteil 2 einen unmittelbar mit dem Exzenterumlaufgetriebe 6 verbundenen Grundkörper 3 auf, welcher über eine hier nicht dargestellte Verriegelungsvorrichtung entriegelbar mit einem Schwenkkörper 4 verbunden ist, welcher mit einer zu verstellenden Sitzlehne verbindbar ist. In den Gebrauchspositionen sind der Grundkörper 3 und der Schwenkkörper 4 über die Verriegelungsvorrichtung relativ zueinander festgelegt, so dass eine Verstellung des Sitzbeschlags 1 eine unmittelbare Verstellung des Schwenkkörpers 4 gemeinsam mit dem Grundkörper 3 zur Folge hat. Zur Verlagerung des Schwenkkörpers 4 ausgehend von einer Gebrauchsposition in eine Vorklappstellung wird der Schwenkkörper 4 von dem Grundkörper 3 entkoppelt und kann dann über die in den Fig. 3 und 3a dargestellte Position in die in den Fig. 4, 4a oder 5, 5a dargestellte Vorklappstellung verlagert werden.

Die Vorklappstellung des Schwenkkörpers 4 wird dabei durch die Position festgelegt, in der eine erste Anschlagfläche 7 an dem Schwenkkörper 4 an einem Anschlagbolzen 8 an dem Beschlagunterteil 5 anliegt. Um neben einer Verlagerung des Schwenkkörpers 4 in eine Vorklappstellung auch eine Verschiebung des über eine Feststellvorrichtung an einer Sitzlängsführung festgelegten Sitz zu erreichen, gelangt der Schwenkkörper 4 nach dessen Entriegelung gegenüber dem Grundkörper 3 mit einem am Schwenkkörper 4 angeordneten Anschlagstift 13 in Eingriff mit einem an einem Entriegelungshebel 9 angeordneten zweiten Anschlagfläche 12.

Der Entriegelungshebel 9 ist erfindungsgemäß über einen Lagerbolzen 10 gelenkig am Beschlagunterteil 5 gelagert. Eine Verlagerung des Schwenkkörpers 4 in die Vorklappstellung bewirkt über den an einer zweiten Anlagefläche 12 am Entriegelungshebel 9 anliegenden Anschlagstift 13 eine Verschwenkung des Entriegelungshebels 9 um den Lagerbolzen 10, wodurch eine an einem der zweiten Anlagefläche 12 gegenüberliegenden Ende des Entriegelungshebels 9 angeordnete Aufnahmeöse 11 verlagert wird. Die Bewegung der Aufnahmeöse 11 kann dazu genutzt werden, um einen hier nicht dargestellten Bowdenzug zu längen, welcher in der Aufnahmeöse 11 anordbar ist. Die Längung des Bowdenzuges kann dazu genutzt werden, um die Feststellvorrichtung der Sitzlängsführung zu entriegeln, so dass in der Vorklappstellung des Sitzbeschlags 1 auch der mit dem Sitzbeschlag 1 ausgestattete Kraftfahrzeugsitz rastfrei an der Sitzlängsführung in eine vordere Stellung verschoben werden kann.

Die Schwenkbewegung des Entriegelungshebels 9 ist insbesondere aus den Fig. 3 und 4 ersichtlich, wobei in Fig. 3 eine Position dargestellt ist, in der der Schwenkkörper 4 noch nicht in der Vorklappstellung angeordnet, jedoch den Entriegelungshebel 9 bereits zur Hälfte verschwenkt hat. In den Fig. 4 und 5 ist ein vollständig verschwenkter Entriegelungshebel 9 in seiner entsprechenden Betätigungslage dargestellt, die dieser in der Vorklappstellung des Schwenkkörpers 4 einnimmt, wobei die Vorklappstellung durch eine Anlage der ersten Anschlagfläche 7 am Schwenkkörper 4 an einem Anschlagbolzen 8 am Beschlagunterteil 5 festgelegt ist.

Wie aus den Fig. 4 und 5 ersichtlich, variiert der Anschlagpunkt des Anschlagbolzens 8 mit der Anschlagfläche 7 in Abhängigkeit von der eingestellten Gebrauchsposition des Sitzbeschlags 1. Die unterschiedlichen Anschlagpunkte, wie diese aus Fig. 4 und 5 ersichtlich sind, ergeben sich dabei aus der Taumelbewegung des Exzenterumlaufgetriebes, wobei sich die in den Fig. 4 und 5 dargestellten Vorklappstellungen dadurch voneinander unterscheiden, dass die jeweils zugrundeliegenden Gebrauchspositionen eine um 180° zueinander verstellte Antriebeswelle 14 aufweisen.

Bei den aus dem Stand der Technik bekannten Sitzbeschlägen mit Taumelgetrieben folgt aus der eingestellten Gebrauchsposition eine abweichende Verstellung des Entriegelungshebels 9, was zu einer von der Gebrauchsposition abhängigen Verlagerung der Aufnahmeöse 11 führt, so dass sich bei den aus dem Stand der Technik bekannten Sitzbeschlägen unterschiedliche Längungen des Bowdenzugs ergeben. Im Gegensatz hierzu erfolgt bei dem Sitzbeschlag 1 eine von der Gebrauchsposition unabhängige Verstellung des Entriegelungshebels 9 aus der in Fig. 1 und 2 dargestellten Ruhelage in die in den Fig. 4 und 5 dargestellte Betätigungslage.

Eine Vermeidung des Einflusses der Taumelbewegung bei dem dargestellten Sitzbeschlag 1 auf die Verstellung des Entriegelungshebels 9 resultiert aus einer Ausrichtung der Anschlagfläche 7 gegenüber der mit dem Anschlagstift 13 an dem Schwenkkörper 4 zur Verstellung des Entriegelungshebels 9 zusammenwirkenden Anschlagfläche 12. Obgleich der Anschlagstift 13 in Abhängigkeit von der eingestellten Gebrauchsposition an unterschiedlichen Punkten der Anschlagfläche 12 anliegt, resultiert aus der Ausrichtung der Anschlagfläche 12 ein Ausgleich der Taumelbewegung, so dass für jede Gebrauchsposition gewährleistet ist, dass der Schwenkkörper 4 zum einen in die Vorklappstellung verlagerbar ist, gleichzeitig der Entriegelungshebel 9 auch in seine Betätigungslage gelangt.

Neben einer Ausrichtung der Anschlagflächen 7, 12 zueinander gewährleistet die beim dargestellten Ausführungsbeispiel erfolgte Anordnung des Anschlagsstifts 13 an dem Schwenkkörper 4 einen besonderen Ausgleich der Taumelbewegung. So ist vorgesehen, dass der Anschlagstift 13 im Bereich einer Geraden an dem Schwenkkörper 4 angeordnet ist, die sich in der Vorklappstellung des Sitzbeschlags 1 senkrecht zur Anschlagfläche 7 durch den Anschlagbolzen 8 erstreckt.

Zur Sicherung der Vorklappstellung, wodurch gewährleistet ist, dass ein in der Betätigungslage verlagerter Entriegelungshebel 9 zuverlässig in dieser Lage verbleibt, dienen zwei Fanghaken 16, 17, von denen ein erster Fanghaken 16 an dem Beschlagunterteil 5 und ein zweiter Fanghaken 17 am Schwenkkörper 4 angeordnet ist, wobei die Fanghaken 16, 17 in der Vorklappstellung mit ihren Halteflächen 18, 19 in Eingriff gelangen und die Vorklappstellung des Schwenkkörpers 4 sichern. Um auch für den Fall, in dem die Lage des Schwenkkörpers 4 durch eine Anlage der Halteflächen 18, 19 aneinander gesichert wird, eine zuverlässige Lagesicherung des Entriegelungshebels 9 zu gewährleisten, sind auch die Halteflächen 18, 19 in der Vorklappstellung im Bereich der Geraden angeordnet, die sich in der Vorklappstellung senkrecht durch die Anschlagfläche 7 und den Anschlagbolzen 8 erstreckt. Hierdurch besteht auch die Möglichkeit, die in Abhängigkeit von der Gebrauchsposition abweichende Anlage der Halteflächen 18, 19 aneinander auszugleichen.

## Patentansprüche

1. Sitzbeschlag (1) für einen Kraftfahrzeugsitz, mit einem mit einem Sitzunterteil verbindbaren Beschlagunterteil (5), einem mit einer Sitzlehne verbindbaren Beschlagoberteil (2), einem das Beschlagoberteil (2) und Beschlagunterteil (5) gelenkig verbindenden Exzenterumlaufgetriebe (6) zur Einstellung der Neigung des Beschlagoberteils (2) gegenüber dem Beschlagunterteil (5) und einem Betätigungsmittel zur Kopplung des Sitzbeschlags (1) mit einer Sitzlängsführung, wobei das Beschlagoberteil (2) einen ortsfest mit der Sitzlehne verbindbaren Schwenkkörper (4) aufweist, der mit einem Grundkörper (3) des Beschlagoberteils (2) entriegelbar verbunden und gegenüber dem Beschlagunterteil (5) in der Entriegelungslage in eine Vorklappstellung bringbar ist, in der eine erste Anschlagfläche (7) an dem einen von Schwenkkörper (4) und Beschlagunterteil (5) an einem Anschlagelement an dem anderen von Schwenkkörper (4) und Beschlagunterteil (5) anliegt, wobei das Betätigungsmittel durch einen Entriegelungshebel (9) gebildet ist, der an dem Beschlagunterteil (5) zwischen einer Ruhelage und einer Betätigungslage verstellbar ist und der einenends zur Anordnung eines Kopplungselements und anderenends einen ersten Anschlagkörper (12) aufweist, der im Bereich um die Vorklappstellung des Schwenkkörpers (4) mit einem zweiten Anschlagkörper (13) an dem Schwenkkörper (4) in Eingriff befindlich ist, wobei der erste Anschlagkörper (12) oder der zweite Anschlagkörper (13) durch eine zweite Anschlagfläche gebildet ist, die derart ausgebildet ist, dass der Schwenkkörper (4) in der Vorklappstellung den Entriegelungshebel (9) unabhängig von der eingestellten Neigung des Beschlagoberteils (2) im Wesentlichen vollständig in die Entriegelungslage verlagert **dadurch gekennzeichnet, dass** der Entriegelungshebel (9) über einen Lagerbolzen (10) gelenkig am Beschlagunterteil (5) gelagert ist.

2. Sitzbeschlag (1) nach Anspruch 1, **dadurch gekennzeichnet, dass** die erste Anschlagfläche (7) gegenüber der zweiten Anschlagfläche (12) in der Vorklappstellung um nicht mehr als 30°, bevorzugt um nicht mehr als 20° geneigt ist.

3. Sitzbeschlag (1) nach Anspruch 1 oder 2, **dadurch gekennzeichnet, dass** die erste Anschlagfläche (7) und die zweite Anschlagfläche (12) in der Vorklappstellung im Wesentlichen parallel verlaufen.

4. Sitzbeschlag (1) nach einem der vorherigen Ansprüche, **dadurch gekennzeichnet, dass** der mit der zweiten Anschlagfläche (12) in Eingriff bringbare Anschlagkörper derart angeordnet ist, dass dieser in der Vorklappstellung im Bereich einer sich in dieser Stellung senkrecht durch die erste Anschlagfläche (7) und das Anschlagelement (8) erstreckenden Orthogonalen an der zweiten Anschlagfläche (12) anliegt.

5. Sitzbeschlag (1) nach einem der vorhergehenden Ansprüche, **dadurch gekennzeichnet, dass** zur lösbaren Arretierung des Schwenkkörpers (4) in dessen Vorklappstellung an dem Beschlagunterteil (5) ein erster Fanghaken (16) mit einer ersten Haltefläche (18) angeordnet ist, der in der Vorklappstellung mit einem eine zweite Haltefläche (19) aufweisenden zweiten Fanghaken (17) in Eingriff befindlich ist, wobei die Halteflächen (18, 19) in der Vorklappstellung im Bereich der Orthogonalen aneinander anliegen.

6. Sitzbeschlag (1) nach einem der vorhergehenden Ansprüche, **dadurch gekennzeichnet, dass** der zweite Anschlagkörper durch einen Anschlagstift (13) gebildet ist, der mit einer am Entriegelungshebel (9) ausgebildeten zweiten Anschlagfläche (12) in Eingriff bringbar ist.

7. Sitzbeschlag (1) nach einem der vorhergehenden Ansprüche, **dadurch gekennzeichnet, dass** die erste Anschlagfläche (7) am Schwenkkörper (4) ausgebildet ist, die in der Vorklappstellung an einem als Anschlagbolzen (8) ausgebildeten Anschlagelement anliegt.

8. Sitzbeschlag (1) nach einem der vorhergehenden Ansprüche, **dadurch gekennzeichnet, dass** der Entriegelungshebel (9) im Bereich zwischen einer Aufnahmeöse (11) zur Anordnung eines Kopplungselements und seiner Schwenkachse ein Langloch (15) aufweist, das koaxial zur Beschlagachse (14) angeordnet ist.

## Claims

1. Seat fitting (1) for a motor vehicle seat, with a fitting lower part (5) which is connectable to a seat lower part, a fitting upper part (2) which is connectable to a seat back, an eccentric epicyclic gearing (6) connecting the fitting upper part (2) and the fitting lower part (5) in an articulated manner and intended for adjusting the inclination of the fitting upper part (2) in relation to the fitting lower part (5), and an actuating means for coupling the seat fitting (1) to a seat longitudinal guide, wherein the fitting upper part (2) has a pivoting body (4) which is connectable in a positionally fixed manner to the seat back, is connected unlockably to a basic body (3) of the fitting upper part (2) and, in the unlocking position, can be brought in relation to the fitting lower part (5) into a pre-folded position, in which a first stop surface (7) on one of pivoting body (4) and fitting lower part (5) bears against a stop element on the other of pivoting body (4) and fitting lower part (5), wherein the actuating means is formed by an unlocking lever (9) which is adjustable on the fitting lower part (5) between an inoperative position and an actuating position and which, at one end, has the arrangement of a coupling element and, at the other end, has a first stop body (12) which, in the region about the pre-folded position of the pivoting body (4), is in engagement with a second stop body (13) on the pivoting body (4), wherein the first stop body (12) or the second stop body (13) is formed by a second stop surface which is designed in such a manner that, in the pre-folded position, the pivoting body (4) substantially completely shifts the unlocking lever (9) into the unlocking position irrespective of the adjusted inclination of the fitting upper part (2), **characterized in that** the unlocking lever (9) is mounted in an articulated manner on the fitting lower part (5) via a bearing bolt (10).

2. Seat fitting (1) according to Claim 1, **characterized in that**, in the pre-folded position, the first stop surface (7) is inclined in relation to the second stop surface (12) by no more than 30°, preferably by no more than 20°.

3. Seat fitting (1) according to Claim 1 or 2, **characterized in that** the first stop surface (7) and the second stop surface (12) run substantially parallel in the pre-folded position.

4. Seat fitting (1) according to one of the preceding claims, **characterized in that** the stop body which can be brought into engagement with the second stop surface (12) is arranged in such a manner that in the pre-folded position, said stop body bears against the second stop surface (12) in the region of an orthogonal extending perpendicularly in this position through the first stop surface (7) and the stop element (8).

5. Seat fitting (1) according to one of the preceding claims, **characterized in that**, for the releasable locking of the pivoting body (4) in the pre-folded position thereof, a first catch hook (16) with a first retaining surface (18) is arranged on the fitting lower part (5), said first catch hook, in the pre-folded position, being in engagement with a second catch hook (17) having a second retaining surface (19), wherein, in the pre-folded position, the retaining surfaces (18, 19) bear against each other in the region of the orthogonal.

6. Seat fitting (1) according to one of the preceding claims, **characterized in that** the second stop body is formed by a stop pin (13) which can be brought into engagement with a second stop surface (12) formed on the unlocking lever (9).

7. Seat fitting (1) according to one of the preceding claims, **characterized in that** the first stop surface (7) is formed on the pivoting body (4) which, in the pre-folded position, bears against a stop element designed as a stop bolt (8).

8. Seat fitting (1) according to one of the preceding claims, **characterized in that** the unlocking lever (9) has an elongated hole (15) in the region between a receiving eye (11) for the arrangement of a coupling element and the pivot axis thereof, the elongated hole being arranged coaxially with respect to the fitting axis (14).

## Revendications

1. Ferrure de siège (1) pour un siège de véhicule, avec une partie inférieure de ferrure (5) pouvant être reliée à une partie inférieure de siège, avec une partie supérieure de ferrure (2) pouvant être reliée à un accoudoir de siège, avec un engrenage planétaire excentrique (6) reliant de façon articulée la partie supérieure de ferrure (2) et la partie inférieure de ferrure (5) pour régler l'inclinaison de la partie supérieure de ferrure (2) par rapport à la partie inférieure de ferrure (5) et avec un moyen d'actionnement pour coupler la ferrure de siège (1) avec un guide longitudinal de siège, la partie supérieure de ferrure (2) comportant un corps pivotant (4) pouvant être relié fixement sur place à l'accoudoir de siège et pouvant être relié à un corps de base (3) de la partie supérieure de ferrure (2) de façon à être déverrouillable et être amené, par rapport à la partie inférieure de ferrure (5) dans la position de déverrouillage, dans une position de pré-rabattement dans laquelle une première surface de butée (7) est ajustée d'une part par le corps pivotant (4) et la partie inférieure de ferrure (5) contre un élément de butée et d'autre part par le corps pivotant (4) et la partie inférieure de ferrure (5), le moyen d'actionnement étant formé par un levier de déverrouillage (9) pouvant être déplacé au niveau de la partie inférieure de ferrure (5) entre une position de repos et une position d'actionnement et comportant à une extrémité l'agencement d'un élément de couplage et à l'autre extrémité un premier corps de butée (12) se trouvant en prise avec un deuxième corps de butée (13) situé contre le corps pivotant (4) dans la région autour de la position de pré-rabattement du corps pivotant (4), le premier corps de butée (12) ou le deuxième corps de butée (13) étant formés par une deuxième surface de butée réalisée de telle sorte que le corps pivotant (4) décale dans la position de pré-rabattement le levier de déverrouillage (9), indépendamment de l'inclinaison réglée de la partie supérieure de ferrure (2) pour l'essentiel entièrement dans la position de déverrouillage, **caractérisée en ce que** le levier de déverrouillage (9) est disposée de façon articulée contre la partie inférieure de ferrure (5) via un boulon de palier de roulement (10).

2. Ferrure de siège (1) selon la revendication 1, **caractérisée en ce que** la première surface de butée (7) est inclinée de tout au plus 30°, de façon préférée de tout au plus 20° par rapport à la deuxième surface de butée (12) dans la position de pré-rabattement.

3. Ferrure de siège (1) selon la revendication 1 ou 2, **caractérisée en ce que** la première surface de butée (7) et la deuxième surface de butée (12) s'étendent pour l'essentiel parallèlement dans la position de pré-rabattement.

4. Ferrure de siège (1) selon l'une quelconque des revendications précédentes, **caractérisée en ce que** le corps de butée pouvant être mis en prise avec la deuxième surface de butée (12) est disposé de telle sorte que celle-ci repose contre la deuxième surface de butée (12) dans la position de pré-rabattement, dans la région d'une perpendiculaire s'étendant perpendiculairement dans cette position à travers la première surface de butée (7) et l'élément de butée (8).

5. Ferrure de siège (1) selon l'une quelconque des revendications précédentes, **caractérisée en ce que** l'arrêt amovible du corps pivotant (4) est réalisé dans sa position de pré-rabattement en disposant un premier crochet de préhension (16) avec une première surface d'arrêt (18) au niveau de la partie inférieure de ferrure (5), ladite surface se trouvant en prise dans la position de pré-rabattement avec un deuxième crochet de préhension (17) comportant une deuxième surface d'arrêt (19), les surfaces d'arrêt (18, 19) butant l'une contre l'autre dans la position de prérabattement, dans la région de la perpendiculaire.

6. Ferrure de siège (1) selon l'une quelconque des revendications précédentes, **caractérisée en ce que** le deuxième corps de butée est formé par une tige de butée (13) pouvant être mise en prise avec une deuxième surface de butée (12) réalisée au niveau du levier de déverrouillage (9).

7. Ferrure de siège (1) selon l'une quelconque des revendications précédentes, **caractérisée en ce que** la première surface de butée (7) est réalisée au niveau du corps pivotant (4), ladite première surface butant dans la position de pré-rabattement contre un élément de butée prenant la forme d'un boulon de butée (8).

8. Ferrure de siège (1) selon l'une quelconque des revendications précédentes, **caractérisée en ce que** le levier de déverrouillage (9) comporte un trou oblong (15) dans la région située entre un oeillet de logement (11) servant d'agencement d'un élément de couplage et son axe de pivotement, ledit trou oblong étant disposé dans le plan coaxial par rapport l'axe de ferrure (14).
